# EUROPEAN PATENT APPLICATION

(11) **EP 3 925 763 A1**
(43) Date of publication of application: **22.12.2021**
(21) Application number: 21020312.1
(22) Date of filing: 15.06.2021
(51) Int. Cl.: B29C 65/08

(54) **ULTRASONIC WELDING UNIT**

(30) Priority: 18.06.2020 CZ 202037692 U
(71) Applicant: Zdarsky, Radim, 463 12 Liberec, Liberec XXV (CZ); Trojan, Pavel, 463 31 Chrastava (CZ)
(72) Inventor: Zdarsky, Radim, 463 12 Liberec, Liberec XXV (CZ); Trojan, Pavel, 463 31 Chrastava (CZ)
(74) Representative: Kolator, Kamil

(57) **Abstract**

Ultrasonic welding unit, designed especially for spot welding of plastic parts, which consists according to Fig. 1 of three units. The first subunit (A) consists of an ultrasonic converter (1) to which a sonotrode (5) is mounted. The converter (1) is connected to the ultrasonic generator by means of a high frequency cable (2). The second subunit (B) consists of a feedback stepper motor (9) with several options for setting the microstep, which is equipped with an encoder with a resolution of min. 1000ppr. Another part of the unit (B) is a linear axis (7) and an electromagnetic brake (11). The third subunit (C) consists of a stepper motor (10) connected by pulleys and a belt to the shaft (6) on which the unit (A) is mounted, i.e. ultrasonic converter (1) and sonotrode (5). The shaft (6) is also equipped with an electromagnetic brake (4).

## Description

### Field of technology

The technical solution relates to an ultrasonic welding unit, intended in particular for spot welding of plastic parts used, for example, in the automotive industry.

### Prior art

The principle of ultrasonic spot welding is based on the transmission of ultrasonic energy in the form of high-frequency oscillations from the sonotrode through the contact part to the contact surface, where heat is generated by friction and subsequently by molecular sonotrode pressure a molecular bond is formed between two plastic parts. The ultrasonic welding equipment itself usually consists of a vertically arranged ultrasonic resonator, consisting of an ultrasonic generator connected via a converter and an amplifier (booster) with a sonotrode, which exerts vibrating energy directly on the surface of the welded plastic parts. Using friction, the plastic is melted and the tip of the sonotrode it is pushed by the material of the upper plastic part towards the lower plastic part. At present, these devices are generally equipped with servo systems with electrically controlled sonotrode feed, which allows you to directly control the sonotrode feed speed, which can also be arbitrarily programmed using the appropriate software to achieve optimal welding force and the entire welding process.

One of the world's largest manufacturers engaged in the development and production of these ultrasonic welding equipment, using completely electric actuators in their construction, significantly eliminating deviations caused by tool movement, and thus improving the repeatability and accuracy of ultrasonic welding is Dukane, which is also the owner of a number of patents for these own devices as well as for methods of ultrasonic welding. From the European document EP 2106899 it is known, for example, its solution of ultrasonic press with servomotor and delayed movement technique, from another document EP 2290182 a similar solution called ultrasonic welding system with delayed movement and from the document EP 3068604 also known method for ultrasonic welding of thermoplastic components.

US 105494 81 and US 2017129162 are also known from the patent documents, or even a solution for speed profiling depending on the path of the sonotrode and its welding tip, since without this profiling it is not possible to weld thin-walled materials so that the weld is sufficiently strong and on the visible side without visible visual damage. This goal is achieved by very subtle changes in the speed of the sonotrode along its path during the welding process precisely by means of relatively expensive and complex servo drives, which at the same time require a very high power input.

The aim of the present invention is therefore, in addition to further improvements to the existing ultrasonic welding devices, in particular to solve the replacement of these servomotors with other drives and to reduce the energy consumption of the device.

### Disclosure of the invention

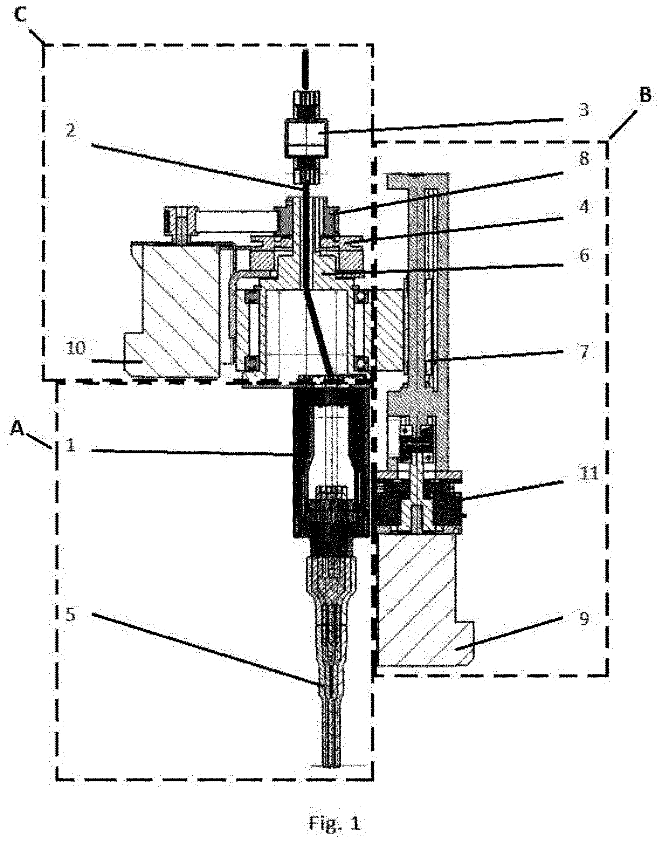

This task is largely solved by an ultrasonic welding unit, designed especially for spot welding of plastic parts, which according to Fig. 1 consists of three units.

The first subunit (A) consists of an ultrasonic converter on which a sonotrode rod is mounted. The converter is connected to the ultrasonic generator using a high-frequency cable. The second subunit (B) consists of a feedback stepper motor with several options for setting the microstep, which is equipped with an encoder with a resolution of min. 1000ppr. Another part of the unit (B) is a linear axis and an electromagnetic brake.

The third subunit (C) consists of a stepper motor connected by means of pulleys and a belt to a shaft on which the unit (A) is mounted, i.e. an ultrasonic converter and a sonotrode. The shaft is also fitted with an electromagnetic brake.

Part of this unit (C) is also a rotary connector used to transmit a high-frequency signal between the generator and the converter. The unit (A) is connected to the unit (B) by a solid and a rigid joint and directly participates in the welding phase itself.

The unit (C) is connected to the unit (A) and its function is to manipulate the unit (A) between the individual welding positions and to transmit a high-frequency signal between the generator and the converter.

The stepper feedback motor provides axial movement of the assembly of the unit (A) and (C) and is used for the welding itself. Its speed is controlled according to information from the ultrasonic generator and control system.

The stepper feedback motor is connected to other parts of the assembly via a linear axis. The shaft of the stepper motor is connected to the electromagnetic brake, which serves to stop the movement in case of need - emergency shutdown of the machine and also to prevent unwanted movement of the assembly in case of machine shutdown or power failure.

The function of the second - stepper - motor is to manipulate the unit (A) between the individual welding positions. The electromagnetic brake complementing the function of this stepper motor is not mounted directly on the shaft of this motor, but is located only on the hollow rotary shaft moving with the unit (A). Thanks to this arrangement, it is possible to lock the shaft with this electromagnetic brake during the welding itself at each individual welding point, when only the stepping motor is used during the welding phase. This makes that the second - stepper - motor for rotating, is discarded during welding and the remaining parts of the report are thus very rigid.

Furthermore, the ultrasonic cable is preferably led out of the converter through the hollow axis of rotation of the shaft and the pulley into the rotary connector. Thanks to this design, this ultrasonic cable is not dynamically stressed in any way.

The set is further supplemented by a driver, the basis of which is a microprocessor with memory. The microprocessor takes care of controlling both motors based on signals from the ultrasonic generator. The controller communicates with the ultrasonic generator within units or fractions of a millisecond and ensures a time-precise sequence of events during welding. Thanks to this added driver, it is possible to omit the PLC or PC from the control.

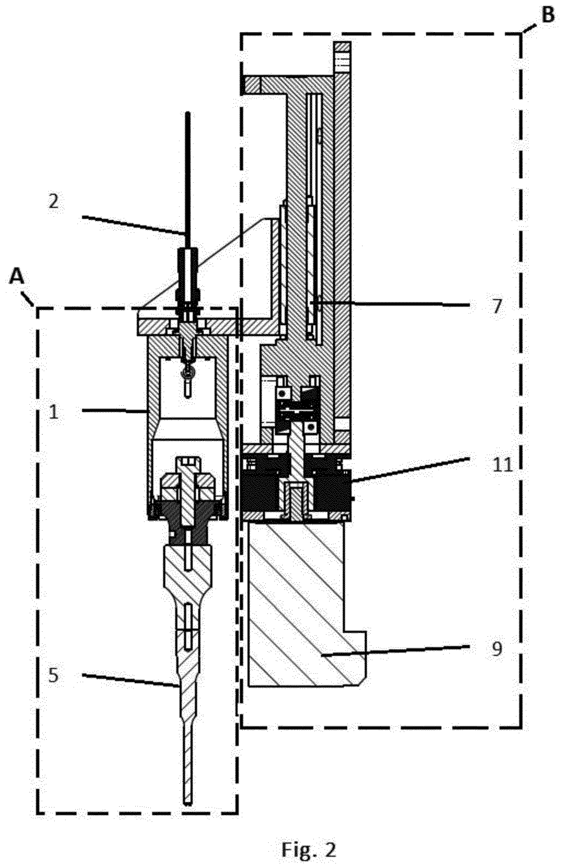

According to Fig. 2, a modified option is an ultrasonic welding unit, which consists of only two units (A) and (B).

The first subunit (A) consists of an ultrasonic converter on which a sonotrode is mounted. The ultrasonic converter is connected to the ultrasonic generator by means of a high-frequency cable.

The second subunit (B) consists of a feedback stepper motor with several options for setting the microstep , which is equipped with an encoder with a resolution of min. 1000ppr. Another part of the unit (B) is a linear axis and an electromagnetic brake.

The unit (A) is connected to the unit (B) by means of a fixed and rigid joint and directly participates in the welding phase itself.

The feedback stepper motor ensures the axial movement of the unit (A) and is used for the welding itself. Its speed is controlled according to information from the ultrasonic generator and control system.

This stepper motor is connected to other parts of the assembly via a linear axis. The shaft of the stepper motor feedback is connected to the electromagnetic brake, which serves to stop the movement in case of need - emergency shutdown of the machine and also to prevent unwanted movement of the assembly in case of machine shutdown or power failure.

The set is further supplemented by a controller based on a microprocessor with memory. The microprocessor controls the motor based on signals from the ultrasonic generator. The controller communicates with the ultrasonic generator within units or fractions of a millisecond and ensures a time-precise sequence of events during welding. Thanks to this added driver, it is possible to omit the PLC or PC from the control.

### Brief description of drawings

The technical solution will be explained in more details with the drawings of an exemplary embodiment of an ultrasonic welding unit, where it shows:
Fig. 1 - assembly of an ultrasonic welding unit with units (A), (B) and (C) in section;
Fig. 2 - assembly of ultrasonic welding unit with units (A) and (B) in section.

### Modes for carrying out the invention

### Example 1

According to FIG. 1, the ultrasonic welding unit in the exemplary embodiment shown consists of three units.

The first subunit (A) comprises an ultrasonic converter (1) on which a sonotrode (5) is mounted. The converter (1) is connected to the ultrasonic generator by means of a high-frequency cable (2).

The second subunit (B) consists of a feedback stepper motor (9) with several options for setting the microstep, which is equipped with an encoder with a resolution of min. 1000ppr - number of pulses during full rotation of the encoder by 360 degrees. Another part of the unit (B) is a linear axis (7) and an electromagnetic brake (11).

The third subunit (C) consists of a second stepping motor (10) connected by means of pulleys and a belt to a shaft (6) on which the unit (A) is mounted, i.e. an ultrasonic converter (1) and a sonotrode (5). The shaft (6) is further fitted with an electromagnetic brake (4).

Part of this unit is also a rotary connector (3) used for the transmission of high-frequency signal between the generator and the converter (1)

The unit (A) is connected to the unit (B) by a fixed and rigid joint and directly participates in the welding phase itself.

The unit (C) is connected to the unit (A) and its function consists in manipulating the unit (A), i.e. the sonotrode (5) - converter (1) assembly between individual welding positions and high-frequency signal transmission between the generator and the converter (1).

The feedback stepper motor (9) ensures the axial movement of the assembly of the unit (A) and (C) is used for the welding itself. Its speed is controlled according to information from the ultrasonic generator and control system.

This motor (9) is connected to the other parts of the assembly via a linear axis (7). The motor shaft (9) is connected to an electromagnetic brake (11), which serves to stop the movement in case of need - emergency shutdown of the machine and also to prevent unwanted movement of the assembly in case of machine shutdown or power failure.

The function of second - stepper - motor (10) consists of handling a unit (A) between the individual positions welding. Electromagnetic brake (4) completing the function of this engine (10) is not mounted directly on the shaft of the motor, but is disposed to a hollow rotary shaft (6) moving with the unit (A). Thanks to this arrangement, it is possible to lock the shaft (6) with this electromagnetic brake (4) during the welding itself at each individual welding point, when only the first motor (9) is used during the welding phase. As a result, the second motor (10), which serves for rotation, is disabled during welding and the remaining parts of the assembly are thus very rigid.

The ultrasonic cable (2) is further preferably led out of the converter (1) through the hollow axis of rotation of the shaft (6) and the pulley (8) to the rotary connector (3). Thanks to this arrangement, this cable (2) is not subjected to any dynamic stress.

The assebly is further supplemented by a controller based on a microprocessor with memory. The microprocessor takes care of controlling both motors (9,10) based on signals from the ultrasonic generator. The controller communicates with the ultrasonic generator within units or fractions of a millisecond and ensures a time-precise sequence of events during welding. Thanks to this added driver, it is possible to omit the PLC or PC from the control.

### Example 2

According to FIG. 1, the ultrasonic welding unit in the exemplary embodiment shown consists of two units.

The first subunit (A) consists of an ultrasonic converter (1) on which a sonotrode (5) is mounted . The converter (1) is connected to the ultrasonic generator by means of a high-frequency cable (2) .

The second part or unit (B) consists of a feedback stepper motor (9) with several options for setting the microstep, which is equipped with an encoder with a resolution of min. 1000ppr. Another part of the unit (B) is a linear axis (7) and an electromagnetic brake (11).

The unit (A) is connected to the unit (B) by means of a fixed and rigid joint and directly participates in the welding phase itself.

The feedback stepper motor (9) ensures the axial movement of the unit (A) and is used for the welding itself. Its speed is controlled according to information from the ultrasonic generator and control system.

This motor is connected to the other parts of the assembly via a linear axis (7). The motor shaft (9) is connected to the electromagnetic brake (11), which serves to stop the movement in case of need - emergency shutdown of the machine and also to prevent unwanted movement of the assembly in case of machine shutdown or power failure.

The set is further supplemented by a controller based on a microprocessor with memory. The microprocessor takes care of controlling the motor (9) based on signals from the ultrasonic generator. The controller communicates with the ultrasonic generator within units or fractions of a millisecond and ensures a time-precise sequence of events during welding. Thanks to this added driver, it is possible to omit the PLC or PC from the control.

### Industrial applicability

The ultrasonic welding unit according to the invention can be widely used, for example, in the automotive industry.

## Claims

1. Ultrasonic welding unit, **characterized in that it** consists of at least two sub-units, the unit (A) consisting of an ultrasonic convector (1) on which a sonotrode (5) is mounted and a converter (1) is connected to an ultrasonic generator by means of a high-frequency cable and the subunit (B) consists of a feedback stepper motor (9), which is equipped with an encoder with a resolution of min. 1000 ppr - number of pulses during full rotation of the encoder by 360 degrees , and further consists of a linear axis (7) and an electromagnetic brake (11).

2. Ultrasonic welding unit according to claim 1, **characterized in that** to the subunit (A) and (B) a subunit (C) is mounted consisting of a stepping motor (10) connected by means of pulleys and a belt to a shaft (6) on which the subunit (A) is mounted and the shaft (6) is further fitted with an electromagnetic brake (4), wherein the subunit (C) also includes a rotary connector (3) for transmitting a high-frequency signal between the generator and the converter (1).

3. Ultrasonic Welding unit according to one of the preceding claims, **characterized in that the** subunit (A) is connected to the subunit (B) by means of a fixed and rigid join and directly participates in the welding phase itself.

4. Ultrasonic welding unit according to one of the preceding claims, **characterized in that the** subunit (C) is connected to the subunit (A) by means of a motor (9) to ensure manipulation of the subunit (A) between individual welding positions and to transmit a high frequency signal between generator and converter (1).

5. Ultrasonic welding unit according to one of the preceding claims, **characterized in that the** stepping motor (9) for ensuring axial movement of the subunit (A) and (C) is intended for welding itself, where its speed is controlled according to information from the ultrasonic generator and control system.

6. Ultrasonic welding unit according to one of the preceding claims, **characterized in that the** stepping motor (9) is connected to the parts of the unit (A) and (C) via a linear axis (7), where the motor shaft (9) is connected to an electromagnetic brake (11).

7. Ultrasonic welding unit according to one of the preceding claims, **characterized in that the** stepping motor (10) for handling the subunit (A) between the individual welding positions and the function of the motor (10) is supplemented by an electromagnetic brake (4) which is located on hollow rotary shaft (6), wherein this electromagnetic brake (4) locks the shaft (6) during the welding phase and the motor (10) used for rotation is disabled during welding.

8. Ultrasonic welding unit according to one of the preceding claims, **characterized in that the** ultrasonic cable (2) is led out of the converter (1) through the hollow shaft axis (6) and the pulley (8) to the rotary connector (3).

9. Ultrasonic welding unit according to one of the preceding claims, **characterized in that the** assembly is supplemented by a controller based on a microprocessor with a memory which controls the motor (9) and / or the motor (10) based on signals from the ultrasonic generator.
